# EUROPEAN PATENT SPECIFICATION

(11) **EP 2 949 495 B1**
(45) Date of publication and mention of the grant of the patent: **28.12.2016**
(21) Application number: 15736368.0
(22) Date of filing: 05.03.2015
(51) Int. Cl.: B60K 6/40, B60K 6/36, B60K 6/48, B60K 6/52, B60K 6/547, B60L 11/14, B60W 10/10, B60W 20/00, B60K 17/344

(54) **HYBRID FOUR-WHEEL-DRIVE VEHICLE**
HYBRIDFAHRZEUG MIT VIERRADANTRIEB
VÉHICULE À QUATRE ROUES MOTRICES HYBRIDE

(30) Priority: 31.03.2014 JP 2014074155
(43) Date of publication of application: 02.12.2015
(73) Proprietor: SUZUKI MOTOR CORPORATION, Hamamatsu-shi Shizuoka 432-8611 (JP)
(72) Inventor: SHIOIRI, Yasushi, Hamamatsu-shi, Shizuoka 432-8611 (JP)
(74) Representative: Fink Numrich
(86) International application number: PCT/JP2015/056497
(87) International publication number: WO 2015/151712

(56) References cited:
- EP-A1- 2 705 968
- WO-A1-2013/110706
- GB-A- 2 346 124
- JP-A- S5 398 629
- JP-A- 2005 001 567
- JP-A- 2005 029 063
- JP-A- 2007 010 158
- US-A- 2 850 920
- 'Dai 43 Kai Tokyo Motor Show' HODO KAIKINBI NO ONEGAI 22 October 2013, XP008178761

## Description

### TECHNICAL FIELD

The present invention relates to a hybrid four-wheel drive vehicle and, more particularly, to a hybrid four-wheel drive vehicle fabricated by installing a motor generator to a four-wheel drive vehicle derived from a rear wheel drive vehicle.

### BACKGROUND ART

In cases when a hybrid four-wheel drive vehicle is fabricated by installing a motor generator to a four-wheel drive vehicle derived from a rear wheel drive vehicle, the motor generator is installed somewhere in its power transmission path.

A conventional hybrid four-wheel drive vehicle is known in which easiness of mounting a motor generator to the vehicle is ensured by installing the motor generator inside a transfer housing of a torque transfer case, see JP Patent No. 3646705.

Document GB 2 346 124 A discloses a motor vehicle having an internal combustion engine and a transmission system which includes a multi-speed gearbox. The vehicle has an engine crankshaft coupled to the engine as well as front and rear propeller shafts for driving the front and rear wheels of the vehicle. Furthermore, the vehicle has an electric motor to supply an auxiliary source of power to a gearbox output shaft. The engine crankshaft and the gearbox output shaft are arranged offset from the front and rear propeller shafts.

Document US 2 850 920 A discloses a motor vehicle having an internal combustion engine as well as a transmission unit and a torque transfer case separated from the transmission unit. A propeller shaft couples the transmission unit and the torque transfer case. Front and rear propeller shafts connect the torque transfer case with front and rear wheels. Moreover, a power take-off shaft is provided at the torque transfer case.

Document EP 2 705 968 A1 discloses a motor vehicle with a torque distributor where auxiliary machines may be arranged at the front and the rear side of the torque distributor.

### SUMMARY OF INVENTION

### PROBLEM TO BE SOLVED BY INVENTION

However, the conventional practice employed upon fabricating a hybrid four-wheel drive vehicle by installing a motor generator to an existing non-hybrid four-wheel drive vehicle poses a problem that the transfer housing needs to be drastically remodeled to meet a need for installation of the motor generator inside the transfer housing and a need for connection of a power supply cable to the motor generator.

Moreover, there is another problem that it is difficult to install a motor generator capable of producing a high output torque to improve the travelling performance because the transfer housing limits the size of a motor generator which may be allowed inside and the location where the motor generator may be allowed to operate.

In view of the above-mentioned problems, the present invention aims to provide a hybrid four-wheel drive vehicle which may be fabricated from an existing non-hybrid four-wheel drive vehicle without any drastic remodeling and which may possess an improved travelling performance.

### MEANS TO SOLVE PROBLEM

In order to achieve the object by solving the problems described above, there is provided, according to a first aspect of the present invention, a hybrid four-wheel drive vehicle including an engine, a transmission coupled to a rear end of the engine, a torque transfer case coupled to the transmission from behind through a first propeller shaft and located below a floor panel, a second propeller shaft for transmission of driving power from the torque transfer case to rear traction wheels, a third propeller shaft for transmission of driving power from the torque transfer case to front traction wheels, and a rotary electric machine which can transmit driving power to the rear traction wheels and the front traction wheels, the second propeller shaft and the third propeller shaft being disposed on an axis which is offset in a transverse direction of the vehicle from an axis of the first propeller shaft, wherein, with respect to a rear outer wall of the torque transfer case, the rotary electric machine is coupled to the torque transfer case from that side of the rear outer wall which is located behind, as viewed from above the vehicle, the first propeller shaft.

Furthermore, according to the first aspect of the present invention, the torque transfer case comprises a first input shaft coupled to the first propeller shaft, a second input shaft coupled to the rotary electric machine, and an output shaft, which may be given driving power transmitted from the first and second input shaft through a gear train, connectable to the second propeller shaft and the third propeller shaft, and that the second input shaft is located below the first input shaft when viewing the torque transfer case in an axial direction along an axis of the first input shaft, an axis of the second input shaft and an axis of the output shaft.

According to a second aspect of the present invention, it is preferable that the torque transfer case comprises a counter shaft, which may be given driving power transmitted from the first and second input shaft through an input gear train working as the gear train, and a shift mechanism, located between the counter shaft and the output shaft, configured to enable a shift between a driving power delivery mode in which driving power is transmitted from the counter shaft to the output shaft through either a first gear train or a second gear train, which work as the gear train, and a neutral mode in which driving power is not transmitted from the counter shaft to the output shaft, and that, when the shift mechanism is caused to shift into the neutral mode, the rotary electric machine is driven to generate electricity by driving power produced by the engine transmitted to the second input shaft from the first input shaft through the counter shaft.

### EFFECTS OF INVENTION

According to the first aspect of the present invention, a rotary electric machine is coupled to a torque transfer case, which is located below a floor panel, from a side of its rear outer wall, so that, without remodeling a floor panel of an existing non-hybrid four-wheel drive vehicle, a relatively large, in outer diameter, high-output rotary electric machine may be installed at a low position below the floor panel. This improves travelling performance of a hybrid four-wheel drive vehicle by lowering the center of gravity and souping up the hybrid four-wheel drive vehicle by such rotary electric machine.

Moreover, the rotary electric machine is coupled to the torque transfer case after passing through the rear outer wall from a location behind, as viewed from above the vehicle, the first propeller shaft, so that the rotary electric machine may be coupled to the torque transfer case without changing the locations of the first propeller shaft, second propeller shaft and third propeller shaft.

Furthermore, the rotary electric machine is not provided inside the torque transfer case but coupled to the torque transfer case from the side of the rear outer wall, a power supply cable may be connected to the rotary electric machine without drastically remodeling a transfer housing of the torque transfer case.

As a result, a hybrid four-wheel drive vehicle may be fabricated from an existing non-hybrid four-wheel drive vehicle equipped with a torque transfer case without any drastic modification, and travelling performance of the vehicle may be improved.

Furthermore, according to the first aspect of the present invention, the second input shaft coupled to the rotary electric machine is located below the first input shaft coupled to the first propeller shaft, the distance to the vehicle body (floor panel) from the second input shaft may be increased. Thus, a large, in outer diameter, rotary electric machine may be installed to the vehicle.

According to the second aspect of the present invention, even when the vehicle is at a halt with the shift mechanism caused to shift into the neutral mode, the rotary electric machine can generate electric power by being driven by driving power produced by the engine which is transmitted from the first input shaft to the second input shaft through the counter shaft.

### BRIEF DESCRIPTION OF DRAWINGS

FIG. 1 is a view depicting one embodiment of a hybrid four-wheel drive vehicle according to the present invention or a top view of the hybrid four-wheel drive vehicle.
FIG. 2 is a view depicting the one embodiment of a hybrid four-wheel drive vehicle according to the present invention or a side view of the hybrid four-wheel drive vehicle.
FIG. 3 is a view depicting the one embodiment of a hybrid four-wheel drive vehicle according to the present invention or a skeleton diagram of a torque transfer case coupled to a motor generator as viewed from above the vehicle.
FIG. 4 is a view depicting the one embodiment of a hybrid four-wheel drive vehicle according to the present invention or a side view of the torque transfer case coupled to the motor generator as viewed from one side of the vehicle.
FIG. 5 is a view depicting the one embodiment of a hybrid four-wheel drive vehicle according to the present invention or a rear view of the torque transfer case coupled to the motor generator as viewed from behind the vehicle.

### DESCRIPTION OF EMBODIMENT(S)

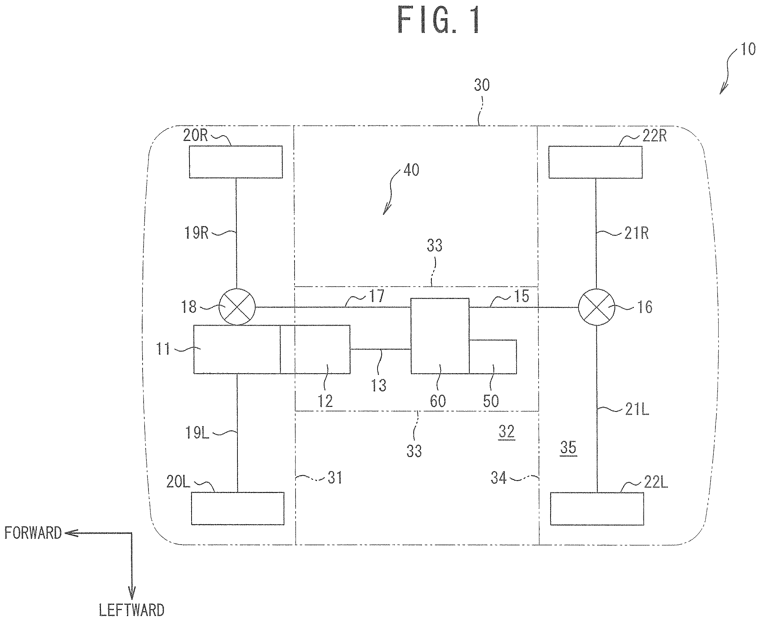

Referring to the drawings, one embodiment of a hybrid four-wheel drive vehicle according to the present invention is described below. FIGS. 1 to 5 are views depicting the embodiment of hybrid four-wheel drive vehicle according to the present invention.

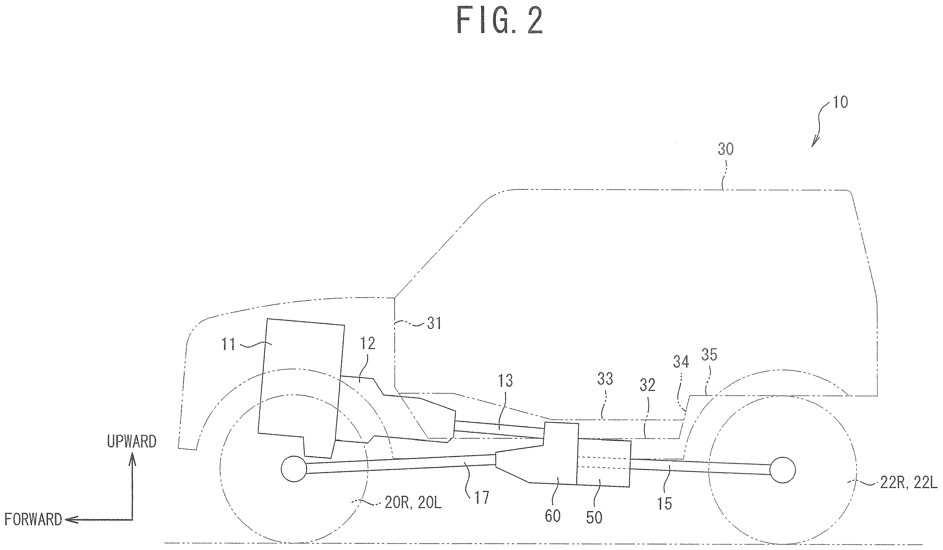

First, the construction is described. In FIGS. 1 and 2, a hybrid four-wheel drive vehicle 10 includes, on a vehicle body 30, an engine 11 and a motor generator 50, as power sources, a pair of rear traction wheels 22R, 22L, and a pair of front traction wheels 20R, 20L. Moreover, hybrid four-wheel drive vehicle 10 includes, on vehicle body 30, a driveline 40 which transmits power from engine 11 and motor generator 50 to only rear traction wheels 22R, 22L or to all of rear traction wheels 22R, 22L and front traction wheels 20R, 20L.

Hybrid four-wheel drive vehicle 10 is configured to travel by transmitting output power of engine 11 and motor generator 50 to rear traction wheels 22R, 22L and front traction wheels 20R, 20L through driveline 40.

Vehicle body 30 includes a dash panel 31 and a floor panel of a front floor panel 32, a floor tunnel 33, a vertical wall section 34 and a rear floor panel 35.

Dash panel 31 extends in almost vertical direction between an engine compartment in which engine 11 is placed and a passenger compartment to serve as a partition between the engine compartment and the passenger compartment.

At the bottom of vehicle body 30, there are provided front floor panel 32 and rear floor panel 35 which constitute a floor of the passenger compartment. Front floor panel 32 constitutes that portion of the floor which extends forward from the middle of vehicle body 30, while rear floor panel 35 constitutes that portion of the floor which extends backward from the middle of vehicle body 30.

Vertical wall section 34 is provided at the rear end of front floor panel 32 and extends in an upward direction, and this vertical wall section 34 has an upper end, to which rear floor panel 35 is continuous. This makes rear floor panel 35 higher, in a vertical direction of the vehicle, than front floor panel 32.

Moreover, floor tunnel 33 is provided almost at the middle of front floor panel 32 in a transverse direction of the vehicle in such a way that this floor tunnel protrudes upward and extends in a forward and rear direction of the vehicle. In addition to those described above, vehicle body 30 includes various kinds of support members (a sub-frame and the like) which support engine 11 and transmission 12.

Engine 11 is an internal combustion engine which operates on combustion of fuel, and it is longitudinally mounted, in a backward tilting position, at the front part of vehicle body 30.

Driveline 40 includes transmission 12 as a gearbox, a first propeller shaft 13, a torque transfer case 60, a second propeller shaft 15 and a third propeller shaft 17. Moreover, driveline 40 includes: a rear differential 16; a front differential 18; front traction wheels 20L, 20R; and rear traction wheels 22R, 22L.

Transmission 12 is coupled to the rear end of engine 11 and configured to convert, using gears, not shown, input power fed by engine 11 to provide an output. Transmission 12 is located, in a backward tilting position, below floor tunnel 33. Transmission 12 may be constituted by an automatic transmission or a manual transmission.

Torque transfer case 60 is coupled to transmission 12 from behind through first propeller shaft 13. Torque transfer case 60 is located below front floor panel 32 and almost at the middle with respect to the forward and rear direction of the vehicle. First propeller shaft 13 is coupled to torque transfer case 60 after passing through a front wall surface which is situated on the left-hand side with respect to a transverse direction of the vehicle and on the upper side with respect to a vertical direction of the vehicle.

Second propeller shaft 15 for transmission of power to rear traction wheels 22R, 22L is coupled to torque transfer case 60 after passing through a rear outer wall which is situated on the right-hand side with respect to the transverse direction of the vehicle and on the lower side with respect to the vertical direction of the vehicle.

Moreover, third propeller shaft 17 for transmission of power to front traction wheels 20R, 20L is coupled to torque transfer case 60 after passing through a front outer wall which is situated on the right-hand side with respect to the transverse direction of the vehicle and on the lower side with respect to the vertical direction of the vehicle.

These second propeller shaft 15 and third propeller shaft 17 are disposed on an axis which is offset in the transverse direction of the vehicle from an axis of first propeller shaft 13.

A motor generator 50 is coupled to torque transfer case 60 after passing through a rear outer wall which is situated on the left-hand side with respect to the transverse direction of the vehicle and on the lower side with respect to the vertical direction of the vehicle. In other words, with respect to the rear outer wall of torque transfer case 60, motor generator 50 is coupled to torque transfer case 60 from that side of the rear outer wall which is located behind, as viewed from above the vehicle, first propeller shaft 13.

Motor generator 50, when serving as a traction motor, can produce driving power for propelling by using electricity from a battery, not shown, to provide the produced driving power to torque transfer case 60 for transmission of driving power only to rear traction wheels 22R, 22L or all of rear traction wheels 22R, 22L and front traction wheels 20R, 20L.

Moreover, motor generator 50, when serving as a generator, can generate electricity by being rotated by driving power fed from torque transfer case 60. Motor generator 50 for the present embodiment constitutes a rotary electric machine in the present invention.

There is provided a rear differential 16 at a rear end of second propeller shaft 15, and this rear differential 16 is configured to distribute driving power from second propeller shaft 15 to left and right rear traction wheels 22R, 22L while allowing some difference in rotational speed between the left and right rear traction wheels 22R, 22L.

There is provided a front differential 18 at a front end of third propeller shaft 17, and this front differential 18 is configured to distribute driving power from third propeller shaft 17 to left and right front traction wheels 20R, 20L while allowing some difference in rotational speed between the left and right front traction wheels 20R, 20L.

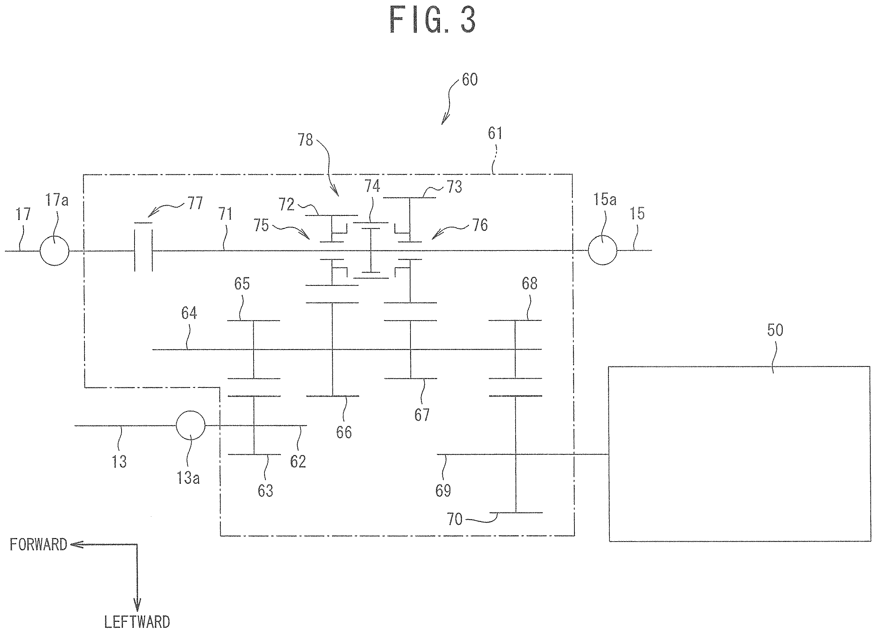

Referring to FIG. 3, torque transfer case 60 includes a transfer housing 61, and a powertrain input shaft 62, which works as a first input shaft, is rotatably supported on a left-side front end portion within this transfer housing 61.

At the front end, powertrain input shaft 62 is coupled to the rear end of first propeller shaft 13 through a joint 13a. Moreover, a drive gear 63 is fixedly coupled to powertrain input shaft 62.

A motor generator input shaft 69, which works as a second input shaft, is rotatably supported on a left-side rear end portion within this transfer housing 61. At the rear end, motor generator input shaft 69 is coupled to motor generator 50. A drive gear 70 is fixedly coupled to motor generator input shaft 69.

A counter shaft 64 is rotatably supported about its axis on almost the middle portion in the transverse direction of the vehicle within transfer housing 61. Driven gears 65, 68 are fixedly coupled to counter shaft 64.

Driven gears 65 and 68 engage drive gear 63 on powertrain input shaft 62 and drive gear 70 on motor generator input shaft 69, respectively. Drive gears 63, 70 and driven gears 65, 68 constitute an input gear train. Additionally, drive gears 66, 67 are fixedly coupled to counter shaft 64.

An output shaft 71 is rotatably supported about its axis on the right-side portion within transfer housing 61. Driven gears 72, 73 are provided around output shaft 71, and these driven gears 72 and 73 engage drive gears 66 and 67, respectively.

Driven gear 72 and drive gear 66 constitute a first gear train 75 configured to provide a high speed stage, and driven gear 73 and drive gear 67 constitute a second gear train 76 configured to provide a low speed stage.

Moreover, at the rear end, output shaft 71 is coupled to the front end of second propeller shaft 15 through a joint 15a, and at the front end, output shaft 71 is coupled to the rear end of third propeller shaft 17 through a joint 17a.

On the side in which the front end of output shaft 71 is, there is provided a 2WD-4WD switching mechanism 77. 2WD-4WD switching mechanism 77 is configured to engage its friction engagement element when it is operated by a vehicle driver to switch to 4WD position.

When 2WD-4WD switching mechanism 77 is operated to switch to 4WD position, torque of output shaft 71 is delivered to both of the second propeller shaft 15 and third propeller shaft 17, and the vehicle becomes operable in 4WD mode.

Moreover, 2WD-4WD switching mechanism 77 is configured to disengage its friction engagement element when it is operated by a vehicle driver to switch to 2WD position. When 2WD-4WD switching mechanism 77 is operated to switch to 2WD position, torque of output shaft 71 is delivered to only the second propeller shaft 15, and the vehicle becomes operable in 2WD mode.

Moreover, a sleeve 74 is provided on output shaft 71 and sleeve 74 is configured to move on output shaft 71 in forward and backward direction by switching operation by a vehicle driver. When sleeve 74 is operated to switch to a high speed position after being moved on output shaft 71 in forward direction, driven gear 72 is brought into rotation with output shaft 71 thereby to provide high speed stage in cooperation with drive gear 66.

Moreover, when sleeve 74 is operated to switch to a low speed position after being moved on output shaft 71 in backward direction, driven gear 73 is brought into rotation with output shaft 71 thereby to provide low speed stage in cooperation with drive gear 67.

Moreover, when sleeve 74 is operated to switch to a neutral position between the high speed position and the low speed position, driven gears 72, 73 are brought into relative rotation to output shaft 71 thereby to interrupt power delivery between output shaft 71 and counter shaft 64.

Therefore, driving power may be delivered from powertrain input shaft 62 and motor generator input shaft 69 to output shaft 71 through a gear train including drive gears 63, 70, driven gears 65, 68, drive gears 66, 67 and driven gears 72, 76.

As readily seen from the above, sleeve 74, first gear train 75 and second gear train 76 constitute a shift mechanism 78 which is configured to enable a shift between the driving power delivery mode (that is, a mode in which the high speed stage or low speed stage is provided) in which driving power is transmitted from counter shaft 64 to output shaft 71 through either first gear train 75 or second gear train 76, and the neutral mode in which driving power is not transmitted from counter shaft 64 to output shaft 71.

In the present embodiment, when shift mechanism 78 is caused to shift into the neutral mode, motor generator 50 is driven to generate electricity by driving power produced by engine 11 transmitted to motor generator input shaft 69 from powertrain input shaft 62 through counter shaft 64.

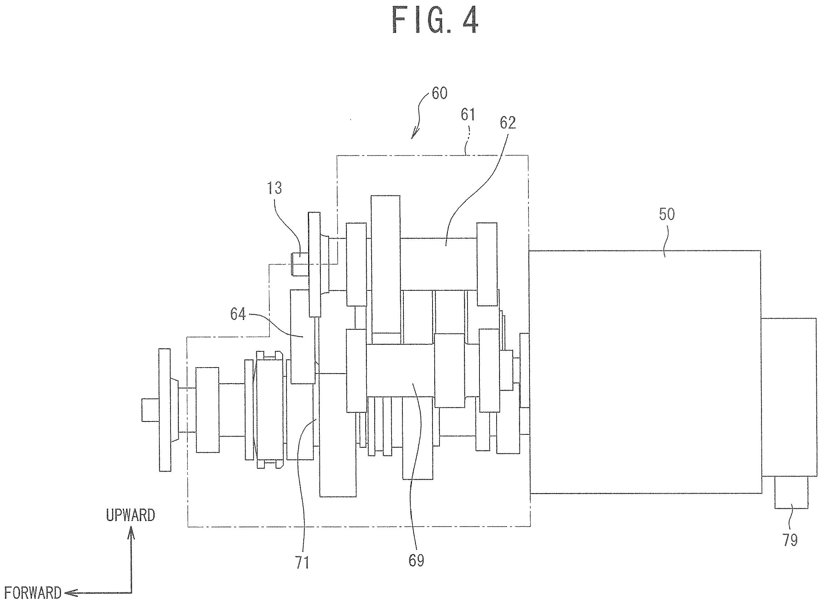

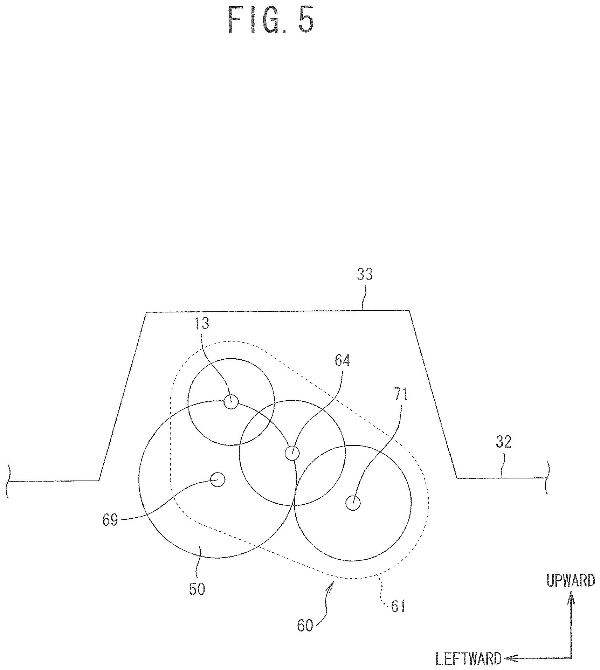

Moreover, in the present embodiment, motor generator input shaft 69 is located below powertrain input shaft 62 when viewing, in FIG. 4, torque transfer case 60 from the side of vehicle and viewing, in FIG. 5, torque transfer case 60 in an axial direction (that is, a direction of an axis) along an axis of powertrain input shaft 62, an axis of motor generator input shaft 69 and an axis of output shaft 71.

Moreover, in FIG. 4, a power supply cable 79 is connected to the rear part of motor generator 50 for supply of power from a battery.

Next, operation is described. When it becomes operable in the driving power delivery mode by sleeve 74 of shift mechanism 78 and motor generator 50 is powered by the battery, hybrid four-wheel drive vehicle 10 can travel by both driving power produced by engine 11 and driving power produced by motor generator 50.

In the present embodiment, with respect to the rear outer wall of torque transfer case 60, motor generator 50 is coupled to torque transfer case 60 from that side of the rear outer wall which is located behind, as viewed from above hybrid four-wheel drive vehicle 10, the first propeller shaft 13.

According to this, motor generator 50 is coupled to the rear outer wall of torque transfer case 60 which is located below front floor panel 32, so that, without remodeling the floor panel of an existing non-hybrid four-wheel drive vehicle, a relatively large, in outer diameter, high-output motor generator may be installed at a low position below the floor panel. This improves travelling performance of hybrid four-wheel drive vehicle 10 by lowering the center of gravity and souping up the hybrid four-wheel drive vehicle by such motor generator 50.

Moreover, motor generator 50 is coupled to the rear outer wall of torque transfer case 60 located behind, as viewed from above hybrid four wheel drive vehicle 10, the first propeller shaft 13, so that motor generator 50 may be coupled to torque transfer case 60 without changing the locations of the first propeller shaft 13, second propeller shaft 15 and third propeller shaft 17.

Furthermore, motor generator 50 is not provided inside torque transfer case 60 but coupled to torque transfer case 60 from the exterior of the rear outer wall, power supply cable 79 may be connected to motor generator 50 without drastically remodeling transfer housing 61.

As a result, hybrid four-wheel drive vehicle 10 may be fabricated from an existing non-hybrid four-wheel drive vehicle equipped with a torque transfer case without any drastic modification, and travelling performance of hybrid four-wheel drive vehicle 10 may be improved.

Moreover, in the present embodiment, motor generator input shaft 69 is located below powertrain input shaft 62 when viewing torque transfer case 60 in an axial direction along an axis of powertrain input shaft 62, an axis of motor generator input shaft 69 and an axis of output shaft 71.

According to this, motor generator input shaft 69 coupled to motor generator 50 is located below powertrain input shaft 62 coupled to the first propeller shaft 13, so that the distance to vehicle body 30, i.e., front floor panel 32 and floor tunnel 33, from motor generator input shaft 69 may be increased. Thus, a large, in outer diameter, motor generator 50 may be installed to hybrid four-wheel drive vehicle 10.

Moreover, in the present embodiment, when shift mechanism 78 is caused to shift into the neutral mode, motor generator 50 is driven to generate electricity by driving power produced by engine 11 transmitted to motor generator input shaft 69 from powertrain input shaft 62 through counter shaft 64.

According to this, even when the vehicle is at a halt with shift mechanism 78 caused to shift into the neutral mode, motor generator 50 can generate electric power by being driven by driving power produced by engine 11 which is transmitted from powertrain input shaft 62 to motor generator input shaft 69 through counter shaft 64.

Although an embodiment of the present invention has been described, it will be apparent to person skilled in the art that modifications may be made without departing from the scope of the present invention. All such modifications and equivalents thereof are intended to be covered by the following claims described in scope of claims.

### DESCRIPTION OF REFERENCES

10...Hybrid four-wheel drive vehicle, 11...Engine, 12...Transmission (Gearbox), 13...First propeller shaft, 15...Second propeller shaft, 17...Third propeller shaft, 20R, 20L...Front traction wheels, 22R, 22L...Rear traction wheels, 32...Front floor panel (Floor panel), 50...Motor generator (Rotary electric machine), 60...Torque transfer case, 61...Transfer case housing, 62...Powertrain input shaft (First input shaft), 63...Drive gear (Gear train), 64...Counter shaft, 65...Driven gear (Gear train), 66...Drive gear (Gear train), 67...Drive gear (Gear train), 69...Motor generator input shaft (Second input shaft), 70...Drive gear (Gear train), 71...Output shaft, 72...Driven gear (Gear train), 73...Driven gear (Gear train), 75...First gear train (Gear train), 76...Second gear train (Gear train), 78...Shift mechanism.

## Claims

1. A hybrid four-wheel drive vehicle including:
an engine (11);
a transmission (12) coupled to a rear end of the engine (11);
a torque transfer case (60) coupled to the transmission from behind through a first propeller shaft (13) and located below a floor panel (32);
a second propeller shaft (15) for transmission of driving power from the torque transfer case (60) to rear traction wheels (22R, 22L);
a third propeller shaft (17) for transmission of driving power from the torque transfer case (60) to front traction wheels (20R, 20L);
a rotary electric machine (50) which can transmit driving power to the rear traction wheels (22R, 22L) and the front traction wheels (20R, 20L),
the second propeller shaft (15) and the third propeller shaft (17) being disposed on an axis which is offset in the transverse direction of the vehicle (10) from an axis of the first propeller shaft (13),
wherein, with respect to a rear outer wall of the torque transfer case (60), the rotary electric machine (50) is coupled to the torque transfer case (60) from that side of the rear outer wall which is located behind, as viewed from above the vehicle (10), the first propeller shaft (13), wherein
the torque transfer case (60) comprises:
a first input shaft (62) coupled to the first propeller shaft (13);
a second input shaft (69) coupled to the rotary electric machine (50); and
an output shaft (71), which may be given driving power transmitted from the first and second input shaft (62, 69) through a gear train, connectable to the second propeller shaft (15) and the third propeller shaft (17), wherein
the second input shaft (69) is located below the first input shaft (62) when viewing the torque transfer case (60) in an axial direction along an axis of the first input shaft (62), an axis of the second input shaft (69) and an axis of the output shaft (71).

2. The hybrid four-wheel drive vehicle according to claim 1, wherein
the torque transfer case (60) comprises:
a counter shaft (64), which may be given driving power transmitted from the first and second input shaft (62, 69) through an input gear train working as the gear train; and
a shift mechanism (78), located between the counter shaft (64) and the output shaft (71), configured to enable a shift between a driving power delivery mode in which driving power is transmitted from the counter shaft (64) to the output shaft (71) through either a first gear train or a second gear train (75, 76), which works as the gear train, and a neutral mode in which driving power is not transmitted from the counter shaft (64) to the output shaft (71), wherein
when the shift mechanism (78) is caused to shift into the neutral mode, the rotary electric machine (50) is driven to generate electricity by driving power produced by the engine (11) transmitted to the second input shaft (69) from the first input shaft (62) through the counter shaft (64).

## Patentansprüche

1. Hybridfahrzeug mit Allradantrieb, umfassend:
einen Verbrennungsmotor (11);
ein Getriebe (12), das an ein rückseitiges Ende des Verbrennungsmotors (11) gekoppelt ist;
ein Drehmomentübertragungsgehäuse (60), das von hinten über eine erste Gelenkwelle (13) an das Getriebe gekoppelt ist und das unterhalb eines Bodenblechs (32) angeordnet ist;
eine zweite Gelenkwelle (15) zur Übertragung von Antriebskraft von dem Drehmomentübertragungsgehäuse (60) auf hintere Antriebsräder (22R, 22L);
eine dritte Gelenkwelle (17) zur Übertragung von Antriebskraft von dem Drehmomentübertragungsgehäuse (60) auf vordere Antriebsräder (20R, 20L);
eine rotierende elektrische Maschine (50), die Antriebskraft auf die hinteren Antriebsräder (22R, 22L) und die vorderen Antriebsräder (20R, 20L) übertragen kann,
wobei die zweite Gelenkwelle (15) und die dritte Gelenkwelle (17) auf einer Achse angeordnet sind, die in der Querrichtung des Fahrzeugs (10) von einer Achse der ersten Gelenkwelle (13) versetzt ist,
wobei, bezüglich einer rückseitigen Außenwand des Drehmomentübertragungsgehäuses (60), die rotierende elektrische Maschine (50) mit dem Drehmomentübertragungsgehäuse (60) von dieser Seite der rückseitigen Außenwand gekoppelt ist, welche, in der Draufsicht des Fahrzeugs (10) gesehen, hinter der ersten Gelenkwelle (13) angeordnet ist, wobei
das Drehmomentübertragungsgehäuse (60) umfasst:
eine erste Eingangswelle (62), die an die erste Gelenkwelle (13) gekoppelt ist;
eine zweite Eingangswelle (69), die mit der rotierenden elektrischen Maschine (50) gekoppelt ist; und
eine Ausgangswelle (71), zu welcher Antriebskraft, die von der ersten und zweiten Eingangswelle (62, 69) über ein Rädergetriebe übertragen wird, zugeführt werden kann und die mit der zweiten Gelenkwelle (15) und der dritten Gelenkwelle (17) verbindbar ist, wobei
die zweite Eingangswelle (69) unterhalb der ersten Eingangswelle (62) angeordnet ist, bei einer Ansicht auf das Drehmomentübertragungsgehäuse (60) in einer axialen Richtung entlang einer Achse der ersten Eingangswelle (62), einer Achse der zweiten Eingangswelle (69) und einer Achse der Ausgangswelle (71).

2. Hybridfahrzeug mit Allradantrieb gemäß Anspruch 1, wobei das Drehmomentübertragungsgehäuse (60) umfasst:
eine Vorgelegewelle (64), zu welcher Antriebskraft zugeführt werden kann, die von der ersten und zweiten Eingangswelle (62, 69) über ein Eingangs-Rädergetriebe, das als das Rädergetriebe dient, übertragen wird; und
einen Schaltmechanismus (78), der zwischen der Vorgelegewelle (64) und der Ausgangswelle (71) angeordnet ist und der konfiguriert ist, ein Umschalten zu ermöglichen zwischen einem Antriebskraftszufuhrmodus, in welchem Antriebskraft von der Vorgelegewelle (64) entweder über ein erstes Rädergetriebe oder über ein zweites Rädergetriebe (75, 76), welches als das Rädergetriebe dient, zu der Ausgangswelle (71) übertragen wird, und einem neutralen Modus, in welchem keine Antriebskraft von der Vorgelegewelle (64) auf die Ausgangswelle (71) übertragen wird, wobei
die rotierende elektrische Maschine (50) zur Erzeugung von Strom durch Antriebskraft angetrieben wird, welche von dem Verbrennungsmotor (11) erzeugt wird und welche von der ersten Eingangswelle (62) über die Vorgelegewelle (64) auf die zweite Eingangswelle (69) übertragen wird, wenn der Schaltmechanismus (78) zum Umschalten in den neutralen Modus veranlasst wird.

## Revendications

1. Véhicule hybride à quatre roues motrices comprenant :
un moteur (11) ;
une transmission (12) couplée à une extrémité arrière du moteur (11) ;
une boîte de transfert de couple (60) couplée à la transmission depuis l'arrière via un premier arbre de transmission (13) et située sous un panneau de plancher (32) ;
un second arbre de transmission (15) pour transmettre une force motrice de la boîte de transfert de couple (60) à des roues motrices arrières (22R, 22L) ;
un troisième arbre de transmission (17) pour transmettre une force motrice de la boîte de transfert de couple (60) à des roues motrices avant (20R, 20L) ;
une machine électrique tournante (50) qui peut transmettre une force motrice aux roues motrices arrières (22R, 22L) et aux roues motrices avant (20R, 20L),
le second arbre de transmission (15) et le troisième arbre de transmission (17) étant disposés sur un axe qui est décalé dans la direction transversale du véhicule (10) par rapport à un axe du premier arbre de transmission (13),
où, par rapport à une paroi extérieure arrière du boîtier de transfert de couple (60), la machine électrique tournante (50) est couplée au boîtier de transfert de couple (60) depuis le côté de la paroi extérieure arrière qui se situe derrière le premier arbre de transmission (13) dans une vue d'en haut du véhicule (10), où
le boîtier de transfert de couple (60) comprend :
un premier arbre d'entrée (62) couplé au premier arbre de transmission (13) ;
un second arbre d'entrée (69) couplé à la machine électrique tournante (50) ; et
un arbre de sortie (71) auquel peut être transmise une force motrice transmise depuis le premier et le second arbre d'entrée (62, 69) via un train d'engrenages, et pouvant être connecté au second arbre de transmission (15) et au troisième arbre de transmission (17), où
le second arbre d'entrée (69) est situé sous le premier arbre d'entrée (62) dans une vue du boîtier de transfert de couple (60) dans une direction axiale le long d'un axe du premier arbre d'entrée (62), d'un axe du second arbre d'entrée (69) et d'un axe de l'arbre de sortie (71).

2. Véhicule hybride à quatre roues motrices selon la revendication 1, où le boîtier de transfert de couple (60) comprend :
un arbre intermédiaire (64) auquel peut être transmise une force motrice transmise depuis les premier et second arbres d'entrée (62, 69) via un train d'engrenages d'entrée servant de train d'engrenage ; et
un mécanisme de commutation (78) situé entre l'arbre intermédiaire (64) et l'arbre de sortie (71) et conçu pour permettre une commutation entre un mode de transmission de force motrice, dans lequel une force motrice est transmise de l'arbre intermédiaire (64) à l'arbre de sortie (71) soit via un premier train d'engrenages soit via un second train d'engrenages (75, 76) qui servent de train d'engrenages, et un mode neutre, dans laquelle la force motrice n'est pas transmise de l'arbre intermédiaire (64) à l'arbre de sortie (71), où
lorsque le mécanisme de commutation (78) est commuté dans le mode neutre, la machine électrique tournante (50) est entraînée pour générer de l'électricité à partir de la force motrice produite par le moteur (11) et transmise du premier arbre d'entrée (62) au second arbre d'entrée (69) via l'arbre intermédiaire (64).
